# EUROPÄISCHE PATENTSCHRIFT

(11) **EP 1 165 360 B1**
(45) Veröffentlichungstag und Bekanntmachung des Hinweises auf die Patenterteilung: **06.08.2003**
(21) Anmeldenummer: 01916962.2
(22) Anmeldetag: 30.01.2001
(51) Int. Cl.: B62D 65/00

(54) **TRANSPORTSYSTEM FÜR DIE ROHBAUMONTAGE VON FAHRZEUGKAROSSERIEN**
TRANSPORT SYSTEM USED IN BODY SHELL ASSEMBLY OF VEHICLE BODIES
SYSTEME DE TRANSPORT POUR MONTAGE DE CONSTRUCTION BRUTE DE CARROSSERIES DE VEHICULES

(30) Priorität: 08.02.2000 DE 10005413
(43) Veröffentlichungstag der Anmeldung: 02.01.2002
(73) Patentinhaber: EISENMANN MASCHINENBAU KG (Komplementär: EISENMANN-Stiftung), 71032 Böblingen (DE)
(72) Erfinder: WEINAND, Hans-Joachim, 71254 Ditzingen (DE); EHRENLEITNER, Franz, 70439 Stuttgart (DE)
(74) Vertreter: Ostertag, Ulrich, Dr.
(86) Internationale Anmeldenummer: EP0100964
(87) Internationale Veröffentlichungsnummer: WO01058746

(56) Entgegenhaltungen:
- US-A- 4 984 349
- US-A- 5 347 700

## Beschreibung

Die Erfindung betrifft ein Transportsystem für die Rohbaumontage von Fahrzeugkarosserien mit den Merkmalen von dem Oberbegriff des Anspruchs 1.
a) einem mindestens zwei Bearbeitungsstationen verbindenden Schienensystem;
b) mindestens einem auf dem Schienensystem mittels einer Antriebseinrichtung verfahrbaren Wagen, auf dem das Werkstück befestigbar ist;
c) Positioniermitteln, welche die exakte räumliche Lage des Werkstückes an jeder Bearbeitungsstation herbeiführen und zwar
   ca) in vertikaler Richtung;
   cb) in Richtung quer zum Schienensystem;
   cc) in Richtung des Schienensystems.

In der sogenannten "Rohbaumontage" von Fahrzeugkarosserien werden die verschiedenen Karosserieteile an mehreren Bearbeitungsstationen mit Hilfe von Robotern durch Punktschweißungen miteinander verbunden. Die Roboter sind so programmiert, daß sie an genau definierten Koordinaten des Raumes ihre Schweißungen setzen. Aufgabe des Transportsystemes, welches die in Entstehung befindliche Fahrzeugkarosserie durch die verschiedenen Bearbeitungsstationen führt, ist es, diese in Entstehung befindliche Fahrzeugkarosserie (hier auch "Werkstück" genannt) auf den Bruchteil von Millimetern genau an die richtige Stelle zu führen, so daß die von den Robotern durchgefüherten Punktschweißungen an den richtigen Werkstückstellen liegen. Die Positionierung des Werkstückes muß dabei entlang dreier Achsen, nämlich in Bewegungsrichtung des Wagens, quer zur Bewegungsrichtung des Wagens und in vertikaler Richtung erfolgen. Neben dieser schwierigen Aufgabe muß das Transportsystem sehr schnell sein, wobei sich der Begriff der "Schnelligkeit" sowohl auf die Beschleunigung und Verzögerung des Wagens aus der Bearbeitungsstation bzw. in die Bearbeitungsstation hinein, auf die Geschwindigkeit zwischen den Bearbeitungsstationen als auch auf die in der jeweiligen Bearbeitungsstation notwendigen Wechselzeiten bezieht.

Ein Transportsystem der eingangs genannten Art ist vom Markt her bekannt. Die Antriebseinrichtung umfaßt hier eine zwischen den Schienen des Schienensystems, parallel zu diesen verlaufende, drehende Antriebswelle, die mit einer wagenseitigen Antriebsnuß gewindeartig in Verbindung gebracht werden kann und den Wagen auf diese Weise entlang des Schienensystems befördert. Die Positionierung des Wagens quer zur Bewegungsrichtung erfolgt durch eine hochgenaue Führung der Räder des Wagens auf den Schienen; die vertikale Position des an dem Wagen befindlichen Bauteileträgers wird durch eine gesonderte Hubeinrichtung besorgt. Die richtige Position des Bauteileträgers in Bewegungsrichtung des Wagens schließlich wird durch Arretiervorrichtungen gewährleistet, die sich in den jeweiligen Bearbeitungsstationen befinden und an entsprechenden Aufnahmen des Wagens einrasten, wenn dieser in Bewegungsrichtung die richtige Position erreicht hat.

Dieses bekannte Transportsystem ist sehr aufwendig: Vor allem ist es außerordentlich schwierig, über die gesamte Länge des Transportsystems hinweg eine seitliche Führung der Räder des Wagens auf dem Schienensystem mit der erforderlichen Präzision zu gewährleisten. Die gesonderte Hubeinrichtung benötigt einen eigenen Antrieb und aufwendige mechanische Komponenten, welche dafür Sorgen, daß tatsächlich der Bauteileträger die gewünschte vertikale Position erreicht. Die Verriegelungen schließlich, welche die Position des Wagens in Bewegungsrichtung festlegen, müssen zur Weiterfahrt durch einen aktiven Antrieb wieder entriegelt werden. Jeder selbständige Antrieb bedeutet jedoch eine zusätzliche Störanfälligkeit des gesamten Transportsystems. Da dieses zentraler Bestandteil der gesamten Rohbaumontageanlage ist, können Ausfälle des Transportsystems zu außerordentlich teuren Stillstandszeiten der gesamten Rohbauanlage führen.

Als Transportsystem für die Rohbaumontage von Fahrzeugkarosserien werden auch Skid-Förderer eingesetzt, wobei die Skids mit Einrichtungen versehen sind, welche eine kombinierte Hub- und Horizontalbewegung des Bauteileträgers ermöglichen. Die Nachteile dieses bekannten Systemes entsprechen, was die Notwendigkeit gesonderter Antriebseinrichtungen für die Positionierung betrifft, denjenigen des oben schon beschriebenen Transportsystems. Darüber hinaus sind die Beschleunigungen und Geschwindigkeiten, die mit Skid-Fördersystemen erzielbar sind, nicht besonders groß.

Auch Elektro-Hängebahnen werden in der Rohbaumontage von Fahrzeugkarosserien als Transportsystem eingesetzt. Diese Elektro-Hängebahnen legen die Bauteile an den verschiedenen Bearbeitungsstationen ab, was lange Wechselzeiten zur Konsequenz hat. Ähnliche Nachteile ergeben sich, wenn sogenannte "fahrerlose Transportsysteme", also rechnergesteuerte, frei bewegliche Wagen, als Transportsystem verwendet werden. US 5347700 offenbart einen Transportsystem gemäß dem Oberbegriff des Anspruchs 1 Aufgabe der vorliegenden Erfindung ist es, ein Transportsystem der eingangs genannten Art so weiterzubilden, daß es preiswerter herzustellen und weniger störanfällig ist.

Diese Aufgabe wird erfindungsgemäß dadurch gelöst, daß
d) die Positioniermittel passiv ohne eigenen Antrieb arbeitende, allein durch die Bewegung des Wagens akti-vierte vom Schienensystem unabhängige Positioniermittel sind
e) die Art der Führung des Wagens auf dem Schienensystem und/oder die Konstruktion des Wagens eine gewisse Bewegung des Werkstücks quer zur Richtung des Schienensystems und in vertikaler Richtung bei Einwirkung entsprechender Kräfte auf den Wagen zuläßt.

Erfindungsgemäß wird also darauf verzichtet, den Wagen bzw. den darauf befindlichen Bauteileträger während des gesamten Bewegungsweges zwischen den Bearbeitungsstationen in Richtung quer zur Bewegungsrichtung präzise zu führen, wie dies beim oben zuerst erwähnten Stand der Technik der Fall war. Vielmehr wird die Lage des Bauteileträgers bzw. des Wagens in Querrichtung ebenso wie in Vertikalund in Bewegungsrichtung erst in der jeweiligen Bearbeitungsstation selbst herbeigeführt. Die hierfür eingesetzten Positioniermittel sind rein passiv. Das bedeutet, daß sie auf eigene Antriebsmittel verzichten können und ausschließlich auf eine "Nocken"- oder "Kulissen"-Wirkung zusammenarbeitender orstfester und wagenseitiger Positioniermittel zurückgreifen. Die Kräfte, die zum Positionieren des Bauteileträgers benötigt werden, werden ausschließlich aus der Bewegung des Wagens durch diese "Nocken"- bzw. "Kulissen"-Wirkung abgeleitet. Um die richtige Positionierung des Bauteileträgers mittels dieser passiven Positioniermittel überhaupt möglich zu machen, ist es erforderlich, daß der Bauteileträgers des Wagens quer zur Richtung des Schienensystems und in vertikaler Richtung des Schienensystems eine gewisse Beweglichkeit aufweist. Insgesamt ist das so ausgebildete erfindungsgemäße Transportsystem sehr preiswert, da eine gute Führung des Wagens auf dem Schienensystem nicht erforderlich ist. Die Kostengünstigkeit rührt auch aus dem Wegfall von gesonderten Antriebssystemen für die Positioniermittel, was gleichzeitig die Störanfälligkeit deutlich reduziert.

Vorteilhaft ist es, wenn die Positioniermittel, welche die richtige Position des Werkstücks in vertikaler Richtung herbeiführen, und die Positioniermittel, welche die richtige Position des Werkstücks quer zur Richtung des Schienensystems herbeiführen, Positionierrampen umfassen, die eine schräge Auflauffläche und eine sich hieran anschließende, parallel zur Bewegungsrichtung verlaufende Positionierfläche aufweisen. Die Positionierrampen können sich dabei am Wagen befinden; in diesem Falle eilt die schräge Auflauffläche der Positionierfläche in Bewegungsrichtung voraus. Wenn dagegen die Positionierrampen ortsfest sind, zeigt die Auflauffläche gegen die Bewegungsrichtung des Wagens. In beiden Fällen bestimmt die Positionierfläche in Zusammenarbeit mit den entsprechenden Gegen-Positioniermitteln die richtige Position des Bauteileträgers, während die Auflauffläche eine beim Auflaufen auf die Positionierrampe erforderliche Verschiebung des Bauteileträgers erleichtert.

Die mit den Positionierrampen zusammenwirkenden Positioniermittel sind zweckmäßigerweise Positionierrollen. Positionierrampen und Positionierrollen können im wesentlichen reibungsfrei zusammenarbeiten.

Von Vorteil ist ferner, wenn die die vertikale Position des Werkstücks bestimmenden Positionierrollen in horizontaler Richtung quer zur Bewegungsrichtung des Wagens verschiebbar gelagert sind. Diese Positionierrollen können sich dann nämlich bei einer Bewegung des Wagens quer zur Richtung des Schienensystems mitbewegen, wodurch ebenfalls ein reibungsbehaftetes Gleiten dieser Positionierrollen an den entsprechenden Gegen-Positioniermitteln vermieden wird. Diese verschiebbaren Positionierrollen werden zweckmäßigerweise durch Federn in eine mittlere Position quer zur Bewegungsrichtung gedrückt, so daß sie also nach dem Wegfahren des letzten Wagens immer wieder in eine definierte Ausgangsposition zurückkehren.

Insbesondere bei größeren Wagen empfiehlt es sich, daß sie an unterschiedlichen Positionen in Längsrichtung Positioniermittel aufweisen, die jeweils mit unterschiedlichen ortsfesten, in Bewegungsrichtung hintereinander liegenden Positioniermitteln zusammenwirken, wobei die räumliche Anordnung der Positioniermittel so ist, daß die am weitesten in Bewegungsrichtung vorne am Wagen angeordneten Positioniermittel nur mit den am weitesten in Bewegungsrichtung vorausliegenden Positioniermitteln in Wechselwirkung treten können. Beispielsweise empfiehlt es sich bei längeren Wagen, im Bereich von dessen vorderem und dessen hinterem Ende wagenseitige Positioniermittel anzubringen. Die vorderen und hinteren wagenseitigen Positioniermittel müssen in der Bearbeitungsstation mit weiter in Bewegungsrichtung voraus und nicht so weit in Bewegungsrichtung voraus liegenden ortsfesten Positioniermitteln zusammenarbeiten. Damit die vorderen wagenseitigen Positioniermittel beim Erreichen der ersten ortsfesten Positioniermittel nicht bereits aktiv werden, wird deren Relativposition so gewählt, daß sie nicht im gegenseitigen Bewegungsweg liegen. Erst die in Bewegungsrichtung weiter voraus liegenden ortsfesten Positioniermittel haben eine Lage, in der sie mit den vorderen wagenseitigen Positioniermitteln zusammenwirken können. Entsprechendes gilt für die weiter hinten am Wagen liegenden Positioniermittel, die aufgrund ihrer räumlichen Anordnung ausschließlich mit denjenigen ortsfesten Positioniermitteln zusammenwirken können, für die sie bestimmt sind.

Die Positioniermittel, welche die richtige Lage des Werkstückes in Richtung des Schienensystems herbeiführen, umfassen vorteilhafterweise einen ortsfesten Anschlag und einen mit diesem in Wechselwirkung tretenden wagenseitigen Anschlag. In Richtung des Schienensystems wird also der Wagen an der korrekten Stelle nicht durch einen Arretiermechanismus sondern nur durch einen Anschlag positioniert. Ohne eine zusätzliche Verriegelung wird der Wagen gegen den ortsfesten Anschlag mit Hilfe einer entsprechend ausgestalteten Antriebseinrichtung angedrückt.

Besonders vorteilhaft in diesem Zusammenhang ist, wenn der ortsfeste Anschlag durch den wagenseitigen Anschlag bei einer Vorwärtsbewegung des Wagens überfahrbar, bei einer Rückwärtsbewegung des Wagens jedoch nicht überfahrbar ist. In diesem Falle geschieht die Positionierung des Wagens in Richtung des Schienensystems wie folgt:

Der Wagen wird zunächst über den ortsfesten Anschlag hinaus bewegt. Sodann kehrt die Antriebseinrichtung die Bewegungsrichtung des Wagens um, der rückwärts gegen den in dieser Richtung nicht überwindbaren Anschlag gefahren wird. Die Weiterbewegung des Wagens in Vorwärtsrichtung nach Beendigung der Arbeiten an der fraglichen Bearbeitungsstation kann ohne Wegziehen des Anschlages erfolgen. Das heißt, auch dieser Anschlag arbeitet ausschließlich im oben erwähnten Sinne "passiv".

Bei einer besonders vorteilhaften Ausführungsform der Erfindung ist ein Stromwächter vorgesehen, welcher die Stromaufnahme der Antriebseinrichtung des Wagens überwacht und bei einer Änderung der Stromaufnahme, die durch das Erreichen der Anschlagposition des Wagens hervorgerufen ist, ein Signal zum Abstellen der Antriebseinrichtung und/oder ein Startsignal für das Bearbeitungswerkzeug an der Bearbeitungsstation abgibt.

Besonders große Beschleunigungen und Verzögerungen sowie hohe Geschwindigkeiten zwischen den Bearbeitungsstationen werden dann erzielt, wenn die Antriebseinrichtung eine Vielzahl von ortsfesten Preßrollenpaaren entlang des Schienensystems umfaßt, die an mindestens einem seitlichen horizontalen Flanschstreifen des Wagens beidseitig angreifen.

Wird diese Art von Antriebseinrichtung verwendet, empfiehlt sich eine Ausgestaltung der Erfindung, bei der die Preßrollenpaare in Bewegungsrichtung des Wagens eine gewisse Beweglichkeit aufweisen und durch eine Federeinrichtung gegen die Bewegungsrichtung in eine Normalposition gedrückt werden, und daß eine Detektionseinrichtung vorgesehen ist, welche eine Auslenkung des entsprechenden Preßrollenpaares, die durch das Erreichen der Anschlagposition des Wagens hervorgerufen ist, erfaßt und hierauf ein Signal zum Abstellen der Antriebseinrichtung und/oder ein Startsignal für das Bearbeitungswerkzeug an der Bearbeitungsstation abgibt.

Ein Ausführungsbeispiel der Erfindung wird nachfolgend anhand der Zeichnung näher erläutert; es zeigen
- Figur 1:: perspektivisch einen Ausschnitt eines Förder-systems für die Rohbaumontage von Fahrzeugkaros-serien mit zwei Bearbeitungsstationen und einem Wagen;

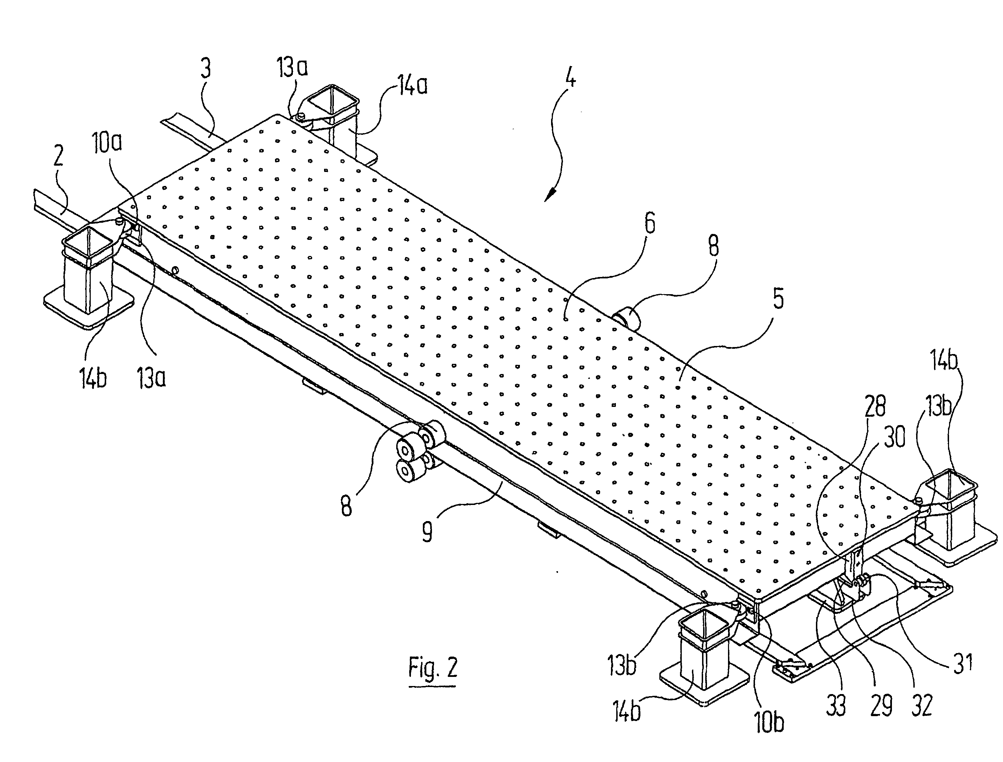

- Figur 2:: als Ausschnittvergößerung von Figur 1 den in einer ersten Bearbeitungsstation stehenden Wagen;

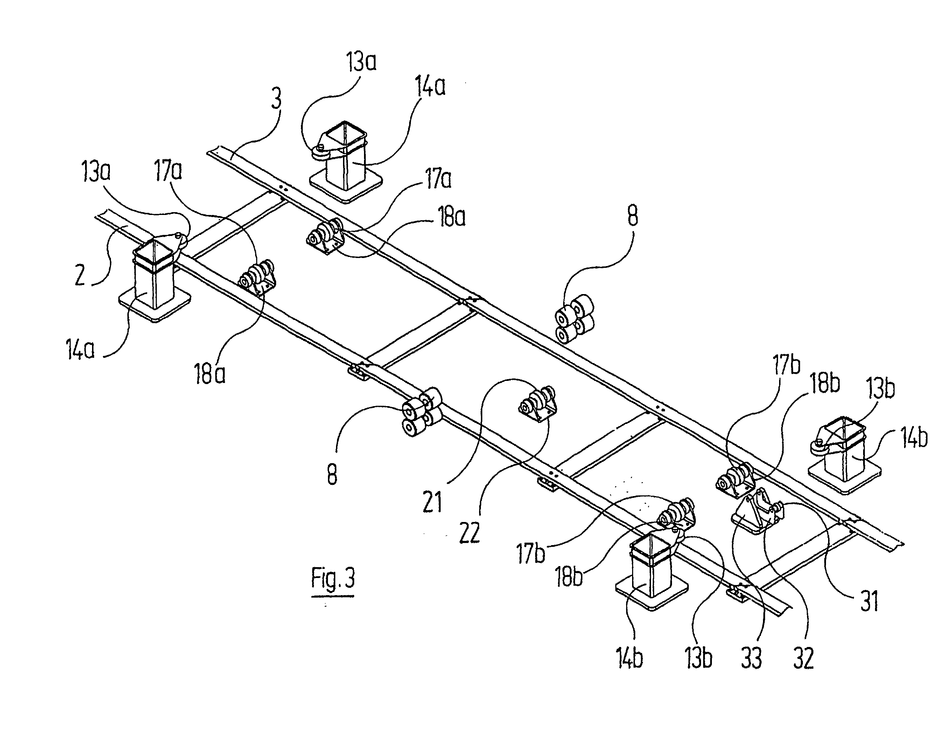

- Figur 3:: ebenfalls als Ausschnittvergrößerung von Figur 1 die zweite Bearbeitungsstation, in der kein Wagen steht;
- Figur 4:: eine Endansicht auf das Fördersystem von Figur 1, gesehen in Richtung des Pfeiles IV und in anderem Maßstab;
- Figur 5:: die Draufsicht auf eine wagenseitige Positionier-rampe, wie sie bei dem Fördersystem der Figuren 1 bis 4 Verwendung findet.

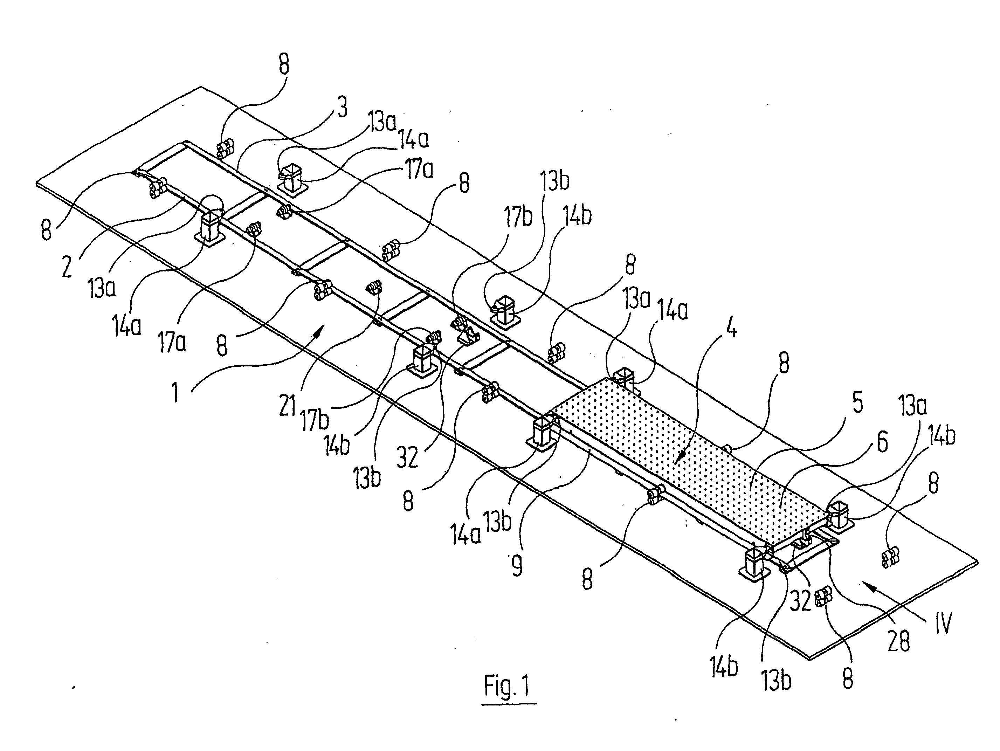

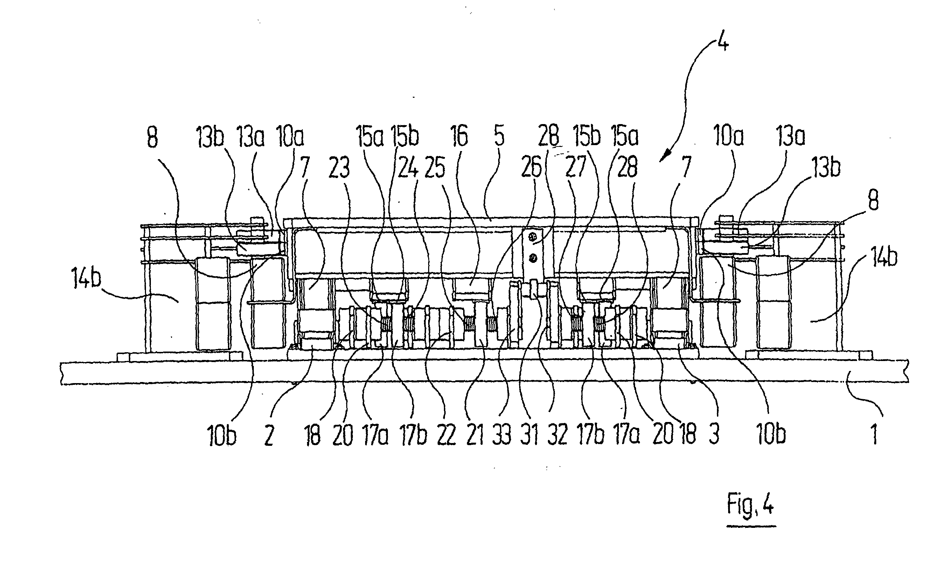

Das in Figur 1 dargestellte Fördersystem ist insgesamt auf einer Grundplatte 1 montiert. Es umfaßt zwei parallele Schienen 2, 3, auf denen sich eine Mehrzahl von Wägen 4 (in Figur 1 nur einer dargestellt) bewegt. Jeder dieser Wägen 4 umfaßt einen Bauteileträger 5, der mit Befestigungsmitteln für die zu montierenden Karosserieteile versehen ist; diese Befestigungsmittel sind in der Zeichnung als Raster von Befestigungsbohrungen 6 angedeutet. Der Bauteileträger 5 wird von Rädern 7 (vergl. Figur 4) getragen, die auf den Schienen 2, 3 abrollen. Die Führung der Räder 7 und damit des gesamten Wagens 4 auf den Schienen 2, 3 ist so, daß eine gewisse Querbewegung des Wagens 4 möglich ist.

Die Räder 7 sind selbst nicht angetrieben. Der Vorwärtstrieb des Wagens 4 wird durch Preßrollenpaare 8 bewirkt, die an seitlichen, horizontalen Flanschstreifen 9 angreifen. Letztere sind an den Bauteileträger 5 angeformt. Die einzelnen Rollen der Preßrolleripaare 8 werden mit hoher Kraft durch entsprechende, in der Zeichnung nicht dargestellte Federeinrichtungen gegen die gegenüberliegenden Flächen der Flanschstreifen 9 angepreßt und durch einen in der Zeichnung ebenfalls nicht dargestellten Antrieb in Drehung versetzt. Hierdurch lassen sich die Wägen 4 sehr rasch auf hohe Geschwindigkeiten beschleunigen und wieder abbremsen.

Preßgrollenpaare 8 der beschriebenen Art befinden sich in regelmäßigen Abständen entlang der Schienen 2, 3, so daß ständig mindestens eines dieser Preßrollenpaare 8 in Eingriff mit einem seitlichen Flanschstreifen 9 des Wagens 4 ist.

Am vorderen und am hinteren Ende der Seitenflächen des Bauteileträgers 5 ist jeweils eine Positionierrampen 10a bzw. 10b montiert. Jede dieser Positionierrampen 10a, 10b weist eine vordere, schräg zur Fahrtrichtung gestellte vertikale Auflauffläche 11 und eine sich an diese anschließende parallel zur Fahrtrichtung verlaufende vertikale Positionierfläche 12 auf.

Die Positionierrampen 10a, 10b wirken in noch näher zu beschreibender Weise mit Positionierrollen 13a, 13b zusammen, die an entsprechenden Stellen innerhalb der Bearbeitungsstation, wo also der Wagen 4 zum Stillstand kommen soll, an Pfosten 14a, 14b befestigt und um vertikale Achsen verdrehbar sind.

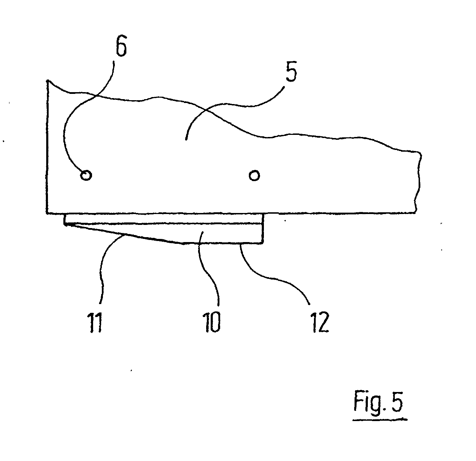

Der Bauteileträger 5 ist auch an seiner Unterseite mit Positionierrampen 15a, 15b und 16 versehen (vgl. Figur 4). Die Positionierrampen 15a, 15b und 16 sind ähnlich aufgebaut wie die in Figur 5 dargestellte Positionierrampe 10, weisen also ebenfalls eine schräge, in Fahrtrichtung vorauseilende Auflauffläche und eine in diesem Falle horizontale Positionierfläche auf, die jedoch anders als bei den Positionierrampen 10a, 10b horizontal verlaufen. Zwei Positionierrampen 15a befinden sich in der Nähe des vorderen Ende des Wagens 4 und besitzen einen verhältnismäßig großen Abstand voneinander. Zwei weitere Positionierrampen 15b sind in der Nähe des hinteren Endes des Wagens 4 angeordnet, besitzen einen kleineren Abstand voneinander und liegen in Querrichtung des Wagens 4 gesehen zwischen den vorderen Positionierrampen 15a.

Die vorderen unteren Positionierrampen 15a wirken mit stationären Positionierrollen 17a zusammen, die an der jeweiligen Bearbeitungsstation über U-förmige Bügel 18a an der Grundplatte 1 so montiert sind, daß sie sich um eine horizontale Achse drehen können. Die hinteren unteren Positionierrampen 15b wirken mit entsprechend angeordneten Positionierrollen 17b zusammen, die mit Hilfe von U-förmigen Bügeln 18b, ebenfalls um horizontale Achsen verdrehbar, an der Grundplatte 1 befestigt sind.

Der Wagen 4 besitzt schließlich eine sowohl in Längs- als auch Querrichtung mittig angeordnete Positionierrampe 16. Diese wirkt mit einer mittleren Positionierrolle 21 zusammen, die entsprechend den Positionierrollen 17a und 17b mit Hilfe eines Bügels 22, um eine horizontale Achse verdrehbar, an der Grundplatte 1 befestigt ist.

Die Positionierrollen 17a, 17b und 21 sind auf den Achsen, auf denen sie gelagert sind, verschiebbar, werden dort aber durch jeweils zwei Federn 23, 24; 25, 26; 27, 28 in mittige Position gedrückt.

An der hinteren Stirnseite des Bauteileträgers 5 des Wagens 4 ist ein Anschlagklotz 28 angeschraubt, der mit einer in Bewegungsrichtung vorauseilenden, nach hinten abfallenden Auflauffläche 29 und einer hinteren, vertikalen Anschlagfläche 30 versehen ist. Der Anschlagklotz 28 wirkt mit einer Anschlagrolle 31 zusammen, die am Ende einer Sperrklinke 32 montiert ist. Die Sperrklinke 32 ist an ihrem der Anschlagrolle 31 gegenüberliegenden Ende gelenkig an einem U-förmigen Bügel 33 montiert, der seinerseits an der Grundplatte 1 angebracht ist. Die Sperrklinke 32 wird durch eine nicht dargestellte Feder in die in der Zeichnung dargestellte Position gedrückt, in welcher sich die Anschlagrolle 31 im Bewegungsweg des Sperrklotzes 28 des Wagens 4 befindet. Die Sperrklinke 32 kann jedoch gegen die Kraft der genannten Feder nach unten weggedrückt werden.

### Das beschriebene Transportsystem arbeitet wie folgt:

Es sei angenommen, daß der Wagen 4 in dem rechts außerhalb des in Figur 1 dargestellten Bereich mit einem ersten Karosserieteil bestückt wurde, an welches an der Bearbeitungsposition, in welcher der Wagen 4 in Figur 1 gezeigt ist, ein zweites Karosserieteil angeschweißt werden soll. Der Wagen 4 fährt hierzu auf den Schienen 2, 3 in Richtung des Pfeiles IV von Figur 1 in diese Bearbeitungsstation ein. Er wird dabei durch Preßrollenpaare 8, die an den seitlichen Flanschstreifen 9 angreifen, angetrieben. Die vorderen, unteren Positionierrampen 15a des Wagens 4 bewegen sich an den ersten ortsfesten unteren Positionierrollen 17b ohne Wechselwirkung vorbei, da sie sich in unterschiedlichen Positionen quer zur Bewegungsrichtung des Wagens 4 befinden. In ähnlicher Weise bewegen sich die vorderen seitlichen Positionierrampen 10a des Wagens 4 ohne Wechselwirkung an den ersten ortsfesten seitlichen Positionierrollen 13b vorbei, da diese Positionierrampen 10a und diese Positionierrollen 13b auf unterschiedlchen Höhen sind.

Wenn sich der Wagen 4 der gewünschten Position in der Bearbeitungsstation nähert, bremsen die Preßrollenpaare 8 den Wagen 4 ab. Der Wagen 4 überfährt die gewünschte Sollposition aus weiter unten erläuterten Gründen ein wenig und kommt dann zum Stillstand. In dieser letzten Phase der Bewegung des Wagens 4 treten nunmehr die verschiedenen Positionierrampen am Wagen 4 mit den verschiedenen ortfesten Positionierrollen in Wechselwirkung und zwar in folgender Weise:

Aufgrund ihrer geometrischen Anordnung laufen zunächst die vorderen unteren Positionierrampen 15a des Wagens 4 mit ihren schräggestellten Auflaufflächen auf die stationären Positionierrollen 17a auf, wodurch der Wagen 4 am vorderen Ende entsprechend angehoben wird, bis die Positionierrollen 17a an der Positionierfläche der vorderen unteren Positionierrampe 15a anliegen. In entsprechender Weise wird gleichzeitig das nachlaufende Ende des Wagens 4 durch Wechselwirkung der hinteren, unteren Positionierrampen 15b mit den stationären Positionierrollen 17b angehoben. In der Mitte wird der Wagen 4 durch Auflaufen der mittleren unteren Positionierrampe 16 auf die mittlere ortfeste Positionierrolle 21 in der entsprechenden Höhe abgestützt.

Die Preßrollenpaare 8 sind so beweglich gelagert, daß sie diese Hubbewegung des Wagens 4 und damit auch der seitlichen Flanschstreifen 9, an denen sie angreifen, mitmachen können.

Kurz nachdem der Bauteileträger 5 so seine richtige Höhe erreicht hat, geraten die seitlichen Positionierrampen 10a, 10b des Wagens 4 gleichzeitig zunächst mit ihren schräg gestellten Auflaufflächen 11 in Berührung mit den entsprechenden ortsfesten seitlichen Positionierrollen 13a, 13b. Der Wagen 4 wird bei seiner Weiterbewegung nach Art einer Nockenführung seitlich verschoben, bis die seitliche Positionierrollen 13a, 13b auf gegenüberliegenden Seiten des Wagens 4 an den Positionierflächen 12 der Positionierrampen 10a, 10b anliegen. Diese seitliche Bewegung des Wagens 4 wird aufgrund der oben erwähnten, verhältnismäßig schlechten Führung des Wagens 4 auf den Schienen 2, 3 möglich.

Die stationären Positionierrollen 17a, 17b und 21 mit horizontaler Drehachse, die mit den unteren Positionierrampen 15a, 15b und 16 des Wagens 4 zusammenarbeiten, werden bei der Seitwärtsbewegung des Wagens 4 unter Kompression der beidseits angeordneten Federn 23, 24, 25, 26, 27, 28 etwas aus ihrer mittleren Ruhelage verschoben, so daß also die Positionierrampen 15a, 15b, 16 keine gleitende Relativbewegung in seitlicher Richtung gegenüber den Positionierrollen 17a, 17b, 21 ausführen müssen.

In der letzten Bewegungsphase vor dem Anhalten des Wagens 4 überfährt der Anschlagklotz 28 am hinteren Ende des Wagens 4 den durch die Anschlagrolle 31 gebildeten Anschlag, indem die Auflauffläche 29 des Anschlagklotzes 28 die federbelastete Klinke 32 nach unten drückt. Sobald der Anschlagklotz 28 die Anschlagrolle 31 in Fahrtrichtung passiert hat, schnappt die Anschlagklinke 32 mit Anschlagrolle 31 wieder nach oben.

In dieser Phase befindet sich der Wagen 4 nunmehr sowohl in seitlicher als auch in vertikaler Richtung exakt auf Sollposition, geführt durch die Wechselwirkung zwischen den Positionierflächen 12 der Positionierrampen 10a, 10b, 15a, 15b und 16 mit den ortsfesten Positionierrollen, 13a, 13b, 17a, 17bund 21. In Bewegungsrichtung gesehen befindet sich dagegen der Wagen 4 noch nicht in der gewünschten Sollposition sondern, wie bereits erwähnt, ein gewisses Stück jenseits dieser Sollposition. Aus diesem Grunde wird nunmehr durch Umkehr der Drehrichtung der Preßrollenpaare 8 eine Rückwärtsbewegung des Wagens 4 eingeleitet, bis die Anschlagfläche 30 des Anschlagklotzes 28 an der Anschlagrolle 31 anstößt. In dieser Relativposition ist der Anschlagklotz 28 nicht in der Lage, die Klinke 32 und damit die Anschlagrolle 31 nach unten zu drücken. Der Wagen 4 bleibt daher stehen. Nunmehr ist der Wagen 4 also auch in Bewegungsrichtung in seiner exakten Sollposition.

Das Erreichen dieser Sollposition kann dadurch detektiert werden, daß sich die Stromaufnahme des Elektromotors, welcher die Preßrollenpaare 8 in Drehung versetzt, bei Erreichen der Anschlagposition erhöht. Das entsprechende Signal kann nun zum Abstellen des Elektromotors und als Startsignal für den an der entsprechenden Bearbeitungsposition befindlichen Roboter verwendet werden, der nunmehr ein zweites Karosserieteil an dem bereits auf dem Wagen 4 befindlichen Karosserieteil anpunktet. Ist dieser Vorgang beendet, gibt der Roboter ein entsprechendes Signal.

Der Elektromotor, der die Preßrollenpaare 8 in Drehung versetzt, wird wieder so bestromt, daß sich der Wagen 4 aus der Bearbeitungsstation hinaus in die nächste Bearbeitungsstation bewegt, wo sich derselbe Anhalt- und Ausrichtvorgang wiederholt, der oben beschrieben wurde, und dann ein weiterer Montagevorgang stattfindet.

Das Anschlagen der Anschlagfläche 30 des Anschlagklotzes 28 an der Anschlagrolle 31, also das Erreichen der richtigen Position in Fahrtrichtung des Wagens 4, kann alternativ auch dadurch erfaßt werden, daß die Preßrollenpaare 8 in Bewegungsrichtung federnd gehalten sind. Schlägt also die Anschlagfläche 30 an der Anschlagrolle 31 bei der Rückwärtsbewegung des Wagens 4 an, suchen sich die Preßrollenpaare 8 in entgegengesetzter Richtung gegen die Federkraft zu bewegen. Diese Bewegung der Preßrollenpaare 8 kann zur Betätigung eines Mikroschalters benutzt werden, der dann das Stopsignal für den Elektromotor und das Startsignal für den Roboter gibt.

## Patentansprüche

1. Transportsystem für die Rohbaumontage von Fahrzeugkarosserien mit
a) einem mindestens zwei Bearbeitungsstationen verbindenden Schienensystem (2, 3);
b) mindestens einem auf dem Schienensystem (2, 3) durch eine Antriebseinrichtung (8, 9) verfahrbaren Wagen (4), auf dem das Werkstück befestigbar ist;
c) Positioniermitteln (10a, 10b, 13a, 13b, 15a, 15b, 16, 17a, 17b, 21, 28, 31), welche die exakte räumliche Lage des Werkstücks an jeder Bearbeitungsstation herbeiführen, und zwar
ca) in vertikaler Richtung;
cb) in Richtung quer zum Schienensystem (2, 3) ;
cc) in Richtung des Schienensystems (2, 3); und umfassen
cd ) ortsfest an jeder Bearbeitungsstation angeordnete Positioniermittel (13a, 13b, 17a, 17b, 21, 31) ;
ce) wagenseitige Positioniermittel (10a, 10b, 15a, 15b, 16, 28), die mit den ortsfesten Positioniermitteln zusammenwirken;
**dadurch gekennzeichnet, daß**
d) die Positioniermittel (10a, 10b, 13a, 13b, 15a, 15b, 16, 17a, 17b, 21, 28, 31) passiv ohne eigenen Antrieb arbeitende, allein durch die Bewegungs des Wagens (4) aktivierte, vom Schienensystem (2, 3) unabhängige Positioniermittel sind
e) die Art der Führung des Wagens (4) auf dem Schienensystem (2, 3) und/oder die Konstruktion des Wagens (4) eine gewisse Bewegung des Werkstücks quer zur Richtung des Schienensystems (2,3) und in vertikaler Richtung bei Einwirkung entsprechender Kräfte auf den Wagen (4) zuläßt.

2. Transportsystem nach Anspruch 1, **dadurch gekennzeichnet, daß** die Positioniermittel (15a, 15b, 16, 17a, 17b, 21), welche die richtige Position des Werkstücks in vertikaler Richtung herbeiführen, und die Positioniermittel (10a, 10b, 13a, 13b), welche die richtige Position des Werkstücks quer zur Richtung des Schienensystems herbeiführen, Positionierrampen (10) umfassen, die eine schräge Auflauffläche (11) und eine sich hieran anschließende, parallel zur Bewegungsrichtung verlaufende Positionierfläche (12) aufweisen.

3. Transportsystem nach Anspruch 2, **dadurch gekennzeichnet, daß** die mit den Positionierrampen (10) zusammenwirkenden Positioniermittel Positionierrollen (13a, 13b, 17a, 17b, 21) sind.

4. Transportsystem nach Anspruch 3, **dadurch gekennzeichnet, daß** die die vertikale Position des Werkstücks bestimmenden Positionierrollen (17a, 17b, 21) in horizontaler Richtung quer zur Bewegungsrichtung des Wagens (4) verschiebbar gelagert sind.

5. Transportsystem nach Anspruch 4, **dadurch gekennzeichnet, daß** die Positionierrollen (17a, 17b, 21) durch Federn (23, 24, 25, 26, 27, 28) in eine mittlere Position quer zur Bewegungsrichtung gedrückt werden.

6. Transportsystem nach einem der vorhergehenden Ansprüche, **dadurch gekennzeichnet, daß** der Wagen (4) an unterschiedlichen Positionen in Längsrichtung Positioniermittel (10a, 10b, 15a, 15b, 16) aufweist, die jeweils mit unterschiedlichen ortsfesten, in Bewegungsrichtung des Wagens (4) hintereinander liegenden Positioniermitteln (13a, 13b, 17a, 17b, 21) zusammenwirken, wobei die räumliche Anordnung der Positioniermittel so ist, daß die am weitesten in Bewegungsrichtung vorne am Wagen (4) angeordneten Positioniermittel (10a, 15a) nur mit den am weitesten in Bewegungsrichtung vorausliegenden ortfesten Positioniermitteln (13a, 17a) in Wechselwirkung treten können.

7. Transportsystem nach einem der vorhergehenden Ansprüche, **dadurch gekennzeichnet, daß** die Positioniermittel, welche die richtige Lage des Werkstücks in Richtung des Schienensystems (2, 3) herbeiführen, einen ortsfesten Anschlag (31) und einen mit diesem zusammenwirkenden wagenseitigen Anschlag (28) umfassen.

8. Transportsystem nach Anspruch 7, **dadurch gekennzeichnet, daß** der ortsfeste Anschlag (31) durch den wagenseitigen Anschlag (28) bei einer Vorwärtsbewegung des Wagens (4) überfahrbar, bei einer Rückwärtsbewegung des Wagens (4) dagegen nicht überfahrbar ist.

9. Transportsystem nach Anspruch 7, **dadurch gekennzeichnet, daß** ein Stromwächter vorgesehen ist, welcher die Stromaufnahme der Antriebseinrichtung (8, 9) des Wagens (4) überwacht und bei einer Änderung der Stromaufnahme, durch die das Erreichen der Anschlagposition des Wagens (4) hervorgerufen ist, ein Signal zum Abstellen der Antriebseinrichtung (8, 9) und/oder ein Startsignal für das Bearbeitungswerkzeug an der Bearbeitungsstation abgibt.

10. Transportsystem nach einem der vorhergehenden Ansprüche, **dadurch gekennzeichnet, daß** die Antriebseinrichtung eine Vielzahl von ortsfesten Preßrollenpaaren (8) entlang des Schienensystems (2, 3) umfaßt, die an mindestens einem seitlichen horizontalen Flanschstreifen (9) des Wagens (4) beidseitig angreifen.

11. Transportsystem nach Anspruch 10, **dadurch gekennzeichnet, daß** die Preßrollenpaare (8) in Bewegungsrichtung des Wagens (4) eine gewisse Beweglichkeit aufweisen und durch eine Federeinrichtung gegen die Bewegungsrichtung des Wagens (4) in eine Normalstellung gedrückt werden und daß eine Detektionseinrichtung vorgesehen ist, welche eine Auslenkung des entsprechenden Preßrollenpaares (8), die durch das Erreichen der Anschlagposition des Wagens (4) hervorgerufen wird, erfaßt und hierauf ein Signal zum Abstellen der Antriebseinrichtung (8, 9) und/oder ein Startsignal für das Bearbeitungswerkzeug an der Bearbeitungsstation abgibt.

## Claims

1. A transport system for the shell assembly of vehicle bodies, the said transport system having
a) a rail system (2, 3) connecting at least two processing stations;
b) at least one carriage (4) which is capable of travelling on the rail system (2, 3) by means of a driving arrangement (8, 9) and on which the workpiece can be fastened;
c) positioning means (10a, 10b, 13a, 13b, 15a, 15b, 16, 17a, 17b, 21, 28, 31) which bring about the exact spatial location of the workpiece at each processing station, namely
ca) in the vertical direction;
cb) in the direction transverse to the rail system (2, 3);
cc) in the direction of the said rail system (2, 3);
which positioning means comprise:
cd) positioning means (13a, 13b, 17a, 17b, 21, 31) which are disposed in a stationary manner at each processing station;
ce) positioning means (10a, 10b, 15a, 15b, 16, 28) on the carriage which cooperate with the stationary positioning means;
**characterized in that**
d) the positioning means (10a, 10b, 13a, 13b, 15a, 15b, 16, 17a, 17b, 21, 28, 31) are positioning means which work passively without a drive of their own, are activated solely by the movement of the carriage (4) and are independent of the rail system (2, 3); and
e) the nature of the guidance of the carriage (4) on the rail system (2, 3) and/or the design of the carriage (4) permits a certain movement of the workpiece transversely to the direction of the rail system (2, 3) and in the vertical direction when corresponding forces act on the said carriage (4).

2. A transport system as claimed in claim 1, wherein the positioning means (15a, 15b, 16, 17a, 17b, 21) which bring about the correct position of the workpiece in the vertical direction and the positioning means (10a, 10b, 13a, 13b) which bring about the correct position of the workpiece transversely to the direction of the rail system comprise positioning ramps (10) which have an oblique run-on face (11) and a positioning face (12) which adjoins the latter and extends parallel to the direction of movement.

3. A transport system as claimed in claim 2, wherein the positioning means which cooperate with the positioning ramps are positioning rollers (13a, 13b, 17a, 17b, 21).

4. A transport system as claimed in claim 3, wherein the positioning rollers (17a, 17b, 21) which determine the vertical position of the workpiece are mounted so as to be displaceable in the horizontal direction transversely to the direction of movement of the carriage (4).

5. A transport system as claimed in claim 4, wherein the positioning rollers (17a, 17b, 21) are pressed by springs (23, 24, 25, 26, 27, 28) into a central position transversely to the direction of movement.

6. A transport system as claimed in one of the preceding claims, wherein the carriage (4) has positioning means (10a, 10b, 15a, 15b, 16) at different positions in the longitudinal direction, which positioning means cooperate, in each case, with different stationary positioning means (13a, 13b, 17a, 17b, 21) which lie one behind the other in the direction of movement of the carriage (4), the spatial disposition of the positioning means being such that the positioning means (10a, 15a) which are disposed furthest forward on the carriage (4) in the direction of movement are able to interact only with the positioning means (13a, 17a) which lie furthest in advance in the direction of movement.

7. A transport system as claimed in one of the preceding claims, wherein the positioning means which bring about the correct location of the workpiece in the direction of the rail system (2, 3) comprise a stationary stop (31) and a stop (28) on the carriage which interacts with the said stationary stop.

8. A transport system as claimed in claim 7, wherein the stationary stop (31) can be travelled over by the stop (28) on the carriage during a forward movement of the carriage (4), but cannot be travelled over during a backward movement of the said carriage (4).

9. A transport system as claimed in claim 7, wherein an automatic current controller is provided which monitors the current consumption of the driving arrangement (8, 9) of the carriage (4) and, when there is a change in the said current consumption caused by the stop position of the carriage (4) being reached, emits a signal for shutting off the driving arrangement (8, 9) and/or a starting signal for the processing tool at the processing station.

10. A transport system as claimed in one of the preceding claims, wherein the driving arrangement comprises a large number of stationary pairs of pressing rollers (8) along the rail system (2, 3), which act, on both sides, on at least one lateral, horizontal flange strip (9) on the carriage (4).

11. A transport system as claimed in claim 10, wherein the pairs of pressing rollers (8) have a certain mobility in the direction of movement of the carriage (4) and are pressed, against the direction of movement of the carriage (4), into a normal position by a spring arrangement, and that a detection arrangement is provided which picks up a deflection of the corresponding pair of pressing rollers (8) caused by the stop position of the carriage (4) being reached, and thereupon emits a signal for shutting off the driving arrangement (8, 9) and/or a starting signal for the processing tool at the processing station.

## Revendications

1. Système de transport pour l'assemblage de carrosseries de véhicules comprenant :
a) un système de rails (2, 3) reliant entre eux au moins deux postes de travail ;
b) au moins un chariot (4) pouvant être déplacé sur le système de rails (2, 3) par un dispositif d'entraînement (8, 9), sur lequel peut être fixée la pièce ;
c) des moyens de positionnement (10a, 10b, 13a, 13b, 15a, 15b, 16, 17a, 17b, 21, 28, 31) qui assurent la position exacte dans l'espace de la pièce au niveau de chaque poste de travail, et ce
ca) verticalement,
cb) transversalement au système de rails (2, 3),
cc) dans la direction du système de rails (2, 3),
et qui comprennent
cd) des moyens de positionnement fixes (13a, 13b, 17a, 17b, 21, 31) situés au niveau de chacun des postes de travail ;
ce) des moyens de positionnement (10a, 10b, 15a, 15b, 16, 28) placés sur le chariot, qui coopèrent avec les moyens de positionnement fixes,
**caractérisé en ce que**
d) les moyens de positionnement (10a, 10b, 13a, 13b, 15a, 15b, 16, 17a, 17b, 21, 28, 31) sont des moyens de positionnement indépendants du système de rails (2, 3), qui fonctionnent de façon passive, sans entraînement propre, et qui sont uniquement activés par le mouvement du chariot (4),
e) le mode de guidage du chariot (4) sur le système de rails (2, 3) et/ou la conception du chariot (4) permettent un certain mouvement de la pièce transversalement à la direction du système de rails (2, 3) et dans la direction verticale lorsque des forces correspondantes s'exercent sur le chariot (4).

2. Système de transport selon la revendication 1, **caractérisé en ce que** les moyens de positionnement (15a, 15b, 16, 17a, 17b, 21), qui confèrent à la pièce la position correcte dans la direction verticale, et les moyens de positionnement (10a, 10b, 13a, 13b), qui confèrent à la pièce la position correcte transversalement à la direction du système de rails, comprennent des rampes de positionnement (10) qui présentent une surface d'attaque oblique (11) et une surface de positionnement (12) faisant suite à cette dernière et s'étendant parallèlement à la direction de déplacement.

3. Système de transport selon la revendication 2, **caractérisé en ce que** les moyens de positionnement coopérant avec les rampes de positionnement (10) sont des galets de positionnement (13a, 13b, 17a, 17b, 21).

4. Système de transport selon la revendication 3, **caractérisé en ce que** les galets de positionnement (17a, 17b, 21) déterminant la position verticale de la pièce sont montés horizontalement de façon à être mobiles transversalement à la direction de déplacement du chariot (4).

5. Système de transport selon la revendication 4, **caractérisé en ce que** les galets de positionnement (17a, 17b, 21) sont poussés par des ressorts (23, 24, 25, 26, 27, 28), transversalement à la direction de déplacement, dans une position centrale.

6. Système de transport selon l'une des revendications précédentes, **caractérisé en ce que** le chariot (4) présente en différents endroits dans la direction longitudinale des moyens de positionnement (10a, 10b, 15a, 15b, 16) qui coopèrent chacun avec différents moyens de positionnement fixes (13a, 13b, 17a, 17b, 21) placés les uns derrière les autres dans la direction de déplacement du chariot (4), sachant que la disposition dans l'espace des moyens de positionnement est telle que les moyens de positionnement (10a, 15a) situés le plus à l'avant du chariot (4) par rapport au sens du déplacement ne peuvent interagir qu'avec les moyens de positionnement fixes (13a, 17a) situés le plus à l'avant par rapport au sens du déplacement.

7. Système de transport selon l'une des revendications précédentes, **caractérisé en ce que** les moyens de positionnement qui confèrent à la pièce la position correcte dans la direction du système de rails (2, 3) comprennent une butée fixe (31) et une butée (28) située sur le chariot qui coopère avec la précédente.

8. Système de transport selon la revendication 7, **caractérisé en ce que** la butée (28) montée sur le chariot peut passer sur la butée fixe (31) lorsque le chariot (4) avance, mais ne le peut en revanche pas lorsque le chariot (4) recule.

9. Système de transport selon la revendication 7, **caractérisé en ce qu'**un relais ampèremétrique est prévu, qui contrôle l'intensité du courant absorbé par le dispositif d'entraînement (8, 9) du chariot (4) et qui, lorsque l'intensité du courant absorbé varie, indiquant par là même que le chariot (4) a atteint sa position de fin de course, délivre un signal pour couper le dispositif d'entraînement (8, 9) et/ou un signal de démarrage pour l'outil au niveau du poste de travail.

10. Système de transport selon l'une des revendications précédentes, **caractérisé en ce que** le dispositif d'entraînement comprend un grand nombre de paires de galets presseurs fixes (8) le long du système de rails (2, 3), qui agissent de part et d'autre d'au moins une bride horizontale latérale (9) du chariot (4).

11. Système de transport selon la revendication 10, **caractérisé en ce que** les paires de galets presseurs (8) présentent une certaine mobilité dans la direction de déplacement du chariot (4) et sont poussés par un dispositif à ressort dans le sens inverse au sens de déplacement du chariot (4) dans une position normale, et **en ce qu'**est prévu un dispositif de détection qui détecte une déviation de la paire de galets presseurs (8) correspondante, qui se produit lorsque le chariot (4) atteint sa position de fin de course, et qui délivre un signal pour couper le dispositif d'entraînement (8, 9) et/ou un signal de démarrage pour l'outil au niveau du poste de travail.
